Europäisches Patentamt

European Patent Office

Office européen des brevets

(11) Veröffentlichungsnummer: **0 432 714 A1**

# (12) EUROPÄISCHE PATENTANMELDUNG

(21) Anmeldenummer: 90123767.7

(22) Anmeldetag: 11.12.90

(51) Int. Cl.5 **A62C 3/16, H02G 3/04, F16L 57/00**

(30) Priorität: 15.12.89 DE 8914770 U

(43) Veröffentlichungstag der Anmeldung:
19.06.91 Patentblatt 91/25

(84) Benannte Vertragsstaaten:
BE DE FR GB NL

(71) Anmelder: Herberts Gesellschaft mit
beschränkter Haftung
Christbusch 25
W-5600 Wuppertal 2(DE)

(72) Erfinder: Cremer, Dieter
Lukas Strasse 11
W-5024 Pulheim(DE)
Erfinder: Kurth, Herberts
Bonnstrasse 8
W-5030 Hürth(DE)
Erfinder: Legermann, Renate
Fischenicher Strasse 4
W-5000 Köln 51(DE)

(74) Vertreter: Türk, Gille, Hrabal
Brucknerstrasse 20
W-4000 Düsseldorf 13(DE)

(54) Brandschutzvorrichtung für temperaturempfindliche Einrichtungen, insbesondere Gasleitungen aus Blei und Kabelführungen.

(57) Brandschutzvorrichtung für temperaturempfindliche Einrichtungen, wie Gasleitungen aus Blei und Kabelführungen, mit einer die Einrichtungen abschirmenden Abdeckung und einem Abstandshalter, wobei die Abdeckung aus einer Schutzplatte besteht, die einen Kern und wenigstens einen auf der dem Abstandshalter zugewandten Seite aufgebrachten Dämmschichtbildner aufweist, wobei eine den Abstandshalter und die Schutzplatte ganz oder teilweise umhüllende Verkleidung vorgesehen ist, die im Abstand zur Schutzplatte einen Hohlraum bildend angeordnet ist.

FIG.1

EP 0 432 714 A1

# BRANDSCHUTZVORRICHTUNG FÜR TEMPERATUREMPFINDLICHE EINRICHTUNGEN, INSBESONDERE GASLEITUNGEN AUS BLEI UND KABELFÜHRUNGEN

Die Erfindung betrifft eine Brandschutzvorrichtung zum Schutz von temperaturempfindlichen Einrichtungen, insbesondere Gasleitungen, mit den Merkmalen des Oberbegriffes des Schutzanspruches 1.

Temperaturempfindliche Einrichtungen, insbesondere Gasleitungen aus Blei oder Kabelführungen, bedürfen eines besonderen Schutzes bzw. einer besonderen Schutzvorrichtung, da bei etwaigen Unfällen oder aber Feuereinwirkung es hier zu erheblichen Risiken kommen kann. Bleirohre z.B. schmelzen bei etwa 300° C und sind sehr anfällig gegen Beschädigungen. Die Lötstellen derartiger Rohre schmelzen bereits bei 180° C.

Derartige Rohre sind jedoch, sofern sie offen, d.h. nicht in z.B. eine Wand eingelassen sind, im Falle eines Brandes bzw. vor der Gefahr einer Beschädigung durch Erhitzung so zu schützen, daß eine möglichst lange Zeit bleibt, um eine wirksame Brandbekämpfung durchzuführen, bevor erste Leckagen auftreten. Das bedeutet in der Praxis, das während einer Brand- oder Hitzeeinwirkung von mindestens 30 Minuten die Temperatur dieser Rohre unter 180° C bleiben muß. Ein Ersetzen dieser Rohre durch Rohre mit geringerer Hitzeempfindlichkeit ist zum einen in vielen Fällen nicht oder aber nur mit einem relativ hohen Aufwand durchführbar, der dann mit einem hohen Kostenaufwand verbunden ist.

Der Erfindung liegt daher die Aufgabe zugrunde, eine Brandschutzvorrichtung für temperaturempfindliche Einrichtungen, insbesondere Gasleitungen aus Blei und Kabelführungen zu schaffen, die diese sowohl vor manueller Beschädigung als auch vor einer Beschädigung durch Erhitzen auf über 180° C vor Ablauf von mindestens 30 Minuten schützt.

Diese Aufgabe wird bei einer Brandschutzvorrichtung der eingangs genannten Gattung mit den Merkmalen des kennzeichnenden Teiles des Schutzanspruches 1 gelöst. Weitere vorteilhafte Ausgestaltungen sind Gegenstand der Unteransprüche.

Dadurch, daß die Abdeckung mit einem Abstandshalter versehen ist, daß die Abdeckung aus einer Schutzplatte besteht, die einen Kern und wenigstens einen auf der dem Abstandshalter zugewandten Seite aufgebrachten Dämmschichtbildner aufweist, daß eine den Abstandshalter und die Schutzplatte ganz oder teilweise umhüllende Verkleidung vorgesehen ist, und daß die Verkleidung im Abstand zur Schutzplatte einen Hohlraum bildend angeordnet ist, wird eine Schutzvorrichtung geschaffen, die gewährleistet, daß die zu schützenden Einrichtungen sowohl vor einer manuellen Beschädigung, als auch vor einer frühzeitigen Erhitzung über 180° C geschützt sind. Desweiteren wird dadurch die Möglichkeit geschaffen, daß die Schutzplatten zum einen auf entsprechende Größen geschnitten werden können und zum anderen zur Formgebung mit zueinander passenden Gärungen durch Fräsen versehen werden können, so daß die Brandschutzvorrichtung dem Verlauf der temperaturempfindlichen Einrichtungen bzw. Gasleitungen folgen kann und entsprechend der Größe der zu schützenden Einrichtungen ausgestaltet werden kann. Es ist weiterhin dadurch eine Brandschutzvorrichtung geschaffen worden, bei der die Schutzplatte bzw. die Dämmschichtbildner bei Erwärmen aufschäumen, jedoch nicht zur vollen Schaumhöhe (etwa 5 cm) aufschäumen können, sondern durch die Verkleidung gebremst wird, so daß es zu einer Verdichtung und damit zu einer besonders dichten, kompakten, geschäumten Dämmschutzschicht kommt, die einen wesentlich erhöhten Feuerwiderstand aufweist und nicht so leicht verascht, wie beispielsweise eine auf 5 cm aufgequollene inhomogene Schicht. Dadurch wird die Erhitzungsdauer bis zum Erreichen der 180° C wesentlich verlängert, so daß es nicht zu einer Erhitzung von 180° C vor Ablauf von wenigstens 30 Minuten kommt.

Ist in oder auf dem Dämmschichtbildner ein Gewebe, Gewirke oder Vlies angeordnet, so wird dadurch die zu erzielende Schutzwirkung weiter verbessert.

Ist die Schutzplatte auf der dem Abstandshalter abgewandten Seite ebenfalls mit einem Dämmschichtbildner oder einer ablativ wirkenden oder isolierend wirkenden Beschichtung versehen, so wird dadurch erreicht, daß unter Brandeinwirkung die zu schützenden Einrichtungen bei z.B. Aufbringung einer Dämmschicht umschlossen und etwaige Hohlräume ausgefüllt werden, so daß ein weiterer Schutz der Einrichtungen vorgesehen ist und ein Weiterleiten von Hitze durch etwaige Hitzebrücken nicht möglich ist.

Besteht der Kern aus einem wärmeisolierenden Substrat, so führt dies ebenfalls zu einer weiteren Verbesserung der Schutzeigenschaften.

Besteht das Substrat aus Mineralfasern oder Calziumsilikatfasern oder Keramikfasern oder Vermiculite und insbesondere aus Mineralfasern, so sind dadurch Materialien gewählt, die sich als besonders widerstandsfähig und geeignet für die Ausgestaltung der Schutzplatte erweisen.

Ist die Verkleidung am Abstandshalter angeordnet, so ist dadurch zum einen gewährleistet, daß die Verkleidung ohne einen weiteren größeren konstruktiven Aufbau anzubringen ist und zum anderen ist ein gleichmäßiger Abstand zwischen der Schutzplatte und der Verkleidung geschaffen.

Ist die Verkleidung ein Gitter, so ist dadurch eine Verkleidung gewählt, die sich zum einen durch ein vermindertes Gewicht und zum anderen dadurch auszeichnet, daß sie im Brandfall eine Einheit mit der aufschäumenden Dämmschicht bildet.

Ist die den Abstandshalter und die Brandschutzplatte umhüllende Verkleidung vollflächig auf der der temperaturempfindlichen Einrichtung abgekehrten Seite angeordnet, so wird dadurch eine Beschädigung sowohl der beschützenden Einrichtungen, als auch der Schutzplatte und der Abstandshalter verhindert.

Beträgt der Abstand zwischen Verkleidung und Brandschutzplatte 0,5 bis 5 cm, insbesondere 1 bis 2 cm, so ist dadurch ein für einen optimalen Feuerschutz bzw. Erhitzungsschutz gegebener Abstand gewährleistet.

Handelt es sich bei dem Gitter um ein Metallgitter, so ist hierdurch eine zum einen leichte und zum anderen preiswerte Verkleidung gewählt, ohne jedoch bei der Schutzqualität Abstriche machen zu müssen.

Ist der Abstandshalter einstückig ausgebildet, so ist dadurch zum einen eine preiswerte Herstellung möglich und zum anderen eine hohe Haltbarkeit gegeben.

Dadurch, daß der einstückig ausgebildete Abstandshalter beliebig geformt, vorzugsweise jedoch U- oder L-förmig ausgeformt ist und die einzelnen Abschnitte des Abstandshalters im Querschnitt U-förmig ausgestaltet sind und die Flansche des U-förmig ausgestalteten Querschnitts in Richtung Schutzplatte weisend angeordnet sind, wird erreicht, daß zum einen entsprechende Ausgestaltungen der Schutzplatten durch den Abstandshalter unterstützt werden und zum anderen ein Aufschäumen des äußeren Dämmschichtbildners auch im Bereich der Abstandshalter möglich ist, wobei die Aufschäumung der Dämmschicht auch im Bereich der Abstandshalter durch dessen Ausgestaltung eine Bremsung erfährt.

Sind die parallel zur Fläche der Schutzplatte verlaufenden Flächen des Abstandshalters mit Öffnungen versehen, so wird dadurch gewährleistet, daß ein Aufschäumen des äußeren Dämmschichtbildners nicht durch einen sogenannten Luftstau gebremst wird.

Sind die Öffnungen zwei versetzt zueinander angeordnete Reihen von Öffnungen, z B. Bohrungen oder Stanzungen, so stellt dies eine besonders vorteilhafte und einfache Ausgestaltung dar.

Ist der Abstandshalter an seinen offenen Flanschenden jeweils mit einer zur Befestigung der Schutzvorrichtung an z.B. einer Wand oder Decke dienenden Lasche versehen, so kann hierdurch die Schutzvorrichtung auf einfache aber praktikable Weise zur Umhüllung der zu schützenden Rohre z.B. an einer Decke befestigt werden.

Durch die erfindungsgemäße Ausgestaltung und Anordnung, einer wärmedämmenden Schutzplatte und dem auf der dem Abstandhalter zugewandten Seite aufgebrachten Dämmschichtbildner, wird somit eine hohe Schutzwirkung erzielt. Durch die auf den Abstandhalter montierte Verkleidung schäumt der Dämmschichtbildner bei Feuereinwirkung auf und füllt den Hohlraum zwischen Schutzplatte und Verkleidung mit einer wärmeisolierenden Schaumschicht. Durch die Verkleidung wird der sich entwickelnde Schaum in seiner Höhe derart gebremst, das seine wärmeisolierenden Eigenschaften und die Beständigkeit gegen hohe Temperaturen erheblich verbessert werden. Diese Wirkung wird noch verstärkt, wenn sich in oder auf der Dämmschichtbildnerschicht ein Gewebe. Gewirke oder Vlies befindet. Als besonders vorteilhaft hat sich der Einsatz eines Gittergewebes, d.h. Glasgittergewebes aus Glasfasern, erwiesen.

Eine weitere Verbesserung der erfindungsgemäßen Brandschutzvorrichtung kann dadurch erzielt werden, daß die Schutzplatte auf der der hitzeempfindlichen Einrichtung zugekehrten Seite mit einer ablativwirkenden Beschichtung oder ebenfalls mit einem Dämmschichtbildner versehen ist. Bei der Verwendung eines Dämmschichtbildners werden die zu schützenden Einrichtungen. z.B. Gasleitungen, bei Hitzeeinwirkung mit dem sich bildenden Schaum umschlossen und etwaige Hohlräume ausgefüllt.

In der Zeichnung ist ein Ausführungsbeispiel der erfindungsgemäßen Brandschutzvorrichtung für temperaturempfindliche Einrichtungen, insbesondere feuergefährdete Gasleitungen, schematisch dargestellt, und zwar zeigt

Fig. 1    einen Schnitt in Vorderansicht der Brandschutzvorrichtung nach Linie A-A aus Figur 5,

Fig. 2    eine Draufsicht der Schutzplatte nach dem Fräsen und vor der Formung,

Fig. 3    einen Abstandhalter in Draufsicht,

Fig. 4    einen Teilausschnitt der Verkleidung in Draufsicht und

Fig. 5    eine Teilansicht der Brandschutzvorrichtung in Draufsicht.

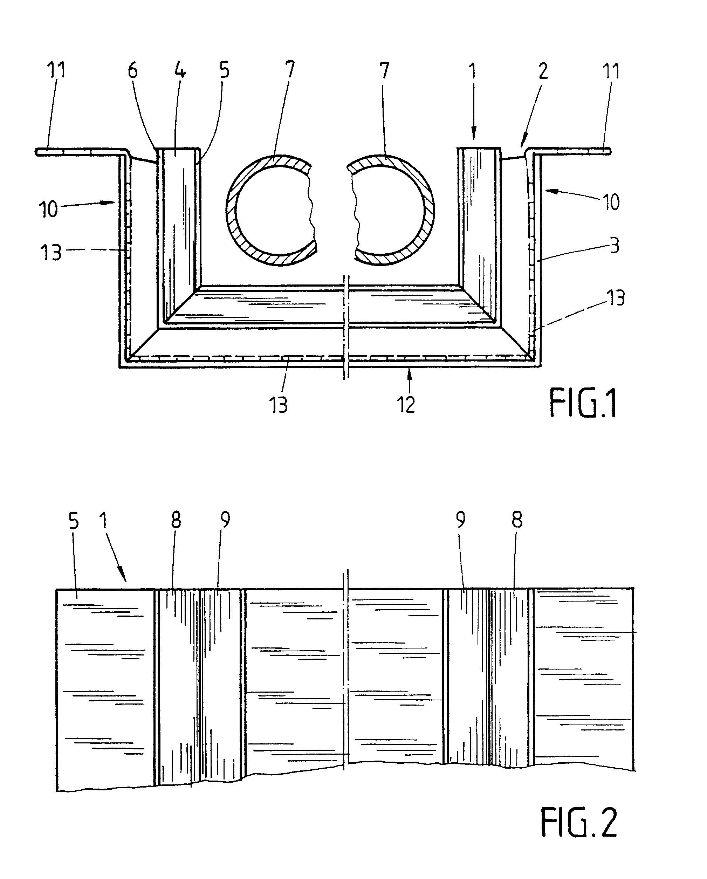

Wie in Figur 1 dargestellt, besteht die Schutzvorrichtung aus einer Schutzplatte (1), einem Abstandhalter (2) und einer Verkleidung. in diesem Beispiel aus einem Metallgitter (3).

Die Schutzplatte weist einen, im hier vorliegenden Ausführungsbeispiel aus Mineralfaser bestehenden Kern (4) auf, auf den an seiner dem Abstandhalter (2) abgewandten Seite ein Dämmschichtbildner (5) aufgetragen ist. Auf der dem Abstandhalter (2) zugewandten Seite des Kerns (4) wurde ebenfalls ein Dämmschichtbildner (6) aufgebracht, in den jedoch ein Glasgittergewebe eingebracht wurde.

Die Schutzplatte (1) umschließt z. B. U-förmig ausgestaltet, dargestellt in Figur 1, eine oder auch mehrere Gasleitungen (7). Eine derartige, z.B.U-förmige, Ausgestaltung wird durch den Aufbau der Schutzplatte (1) ermöglicht.

Wie in Figur 2 dargestellt, ist es möglich, die Schutzplatten zum einen auf die notwendige Größe zurecht zu schneiden und zum anderen die Schutzplatte (1) anzufräsen.Eine Anfräsung findet dabei an der dem Glasgittergewebe gegenüberliegenden Seite der Schutzplatte (1) statt, so daß, wie in Figur 2 gezeigt, eine Gärung dadurch entsteht, daß jeweils zwei zueinander passende Flächen (8, 9) gefräst werden, wobei die Fräsung auf der den Gasleitungen zugewandten Seite beginnt und zwar in der Dämmschichtbildnerschicht (5) und sich über den Kern (4) fortsetzt, ohne jedoch die das Glasgittergewebe beinhaltende gegenüberliegende Dämmschichtbildnerschicht (6) zu beschädigen. Nach der Anfräsung ermöglichen die Gärungen, wie im hier vorliegenden Ausführungsbeispiel gezeigt, z.B. eine U-förmige Ausgestaltung der Schutzplatte (1).

Die sich berührenden Fräsflächen (8, 9) bzw. die sich berührenden Gärungen und Stoßkanten der Schutzplatten (1) werden mit einem Brandschutzkleber verklebt bzw. abgedichtet.

Hierzu wird ein feuerfester Kleber, d.h. Kontaktkleber, in dem feuerfeste Substanzen eingearbeitet wurden, verwandt. Genauso ist es jedoch denkbar, daß anders ausgestaltete Fräsflächen angebracht werden, um dem Verlauf der zu schützenden Gasleitungen (7) folgen zu können. Ist die Schutzvorrichtung z.B. L- oder U-förmig ausgestaltet, so wird die Kontaktfläche zur z.B. Wand oder Decke ebenfalls mit einem Brandschutzkleber abgedichtet.

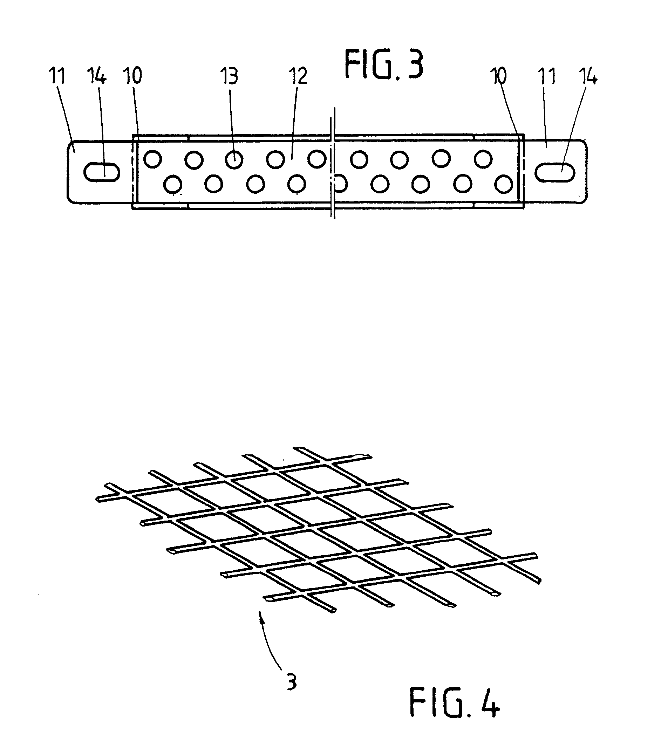

Die U-förmig ausgestaltete Schutzplatte (1) wird mittels eines Abstandhalters (2), die zu schützenden Gasleitungen (7) umschließend, an z.B. der Decke oder Wand befestigt. Dazu ist der Abstandhalter (2) in dem hier vorliegenden Ausführungsbeispiel einstückig und U-förmig aus verzinktem Stahlblech hergestellt. Am offenen Ende der beiden Flansche (10) des U-förmigen Abstandshalters (2) weist dieser jeweils eine im rechten Winkel angeordnete Lasche (11) auf, die mit einem Langloch (14), dargestellt in Figur 3, zur Befestigung des Abstandhalters (2) versehen ist.

Sowohl die beiden Flansche (10) als auch das sie verbindende Zwischenstück (12) sind ebenfalls in ihrem Querschnitt U-förmig ausgebildet, wobei deren Flansche bzw. das offene Ende des U-förmigen Querschnitts in Richtung Schutzplatte (1) angeordnet sind. Desweiteren weisen die parallel zur Schutzplatte (1) angeordneten Querschnittsflächen des U-förmig ausgestalteten Abstandhalters (2) Öffnungen (13) auf, die über die gesamte Fläche sowohl der beiden Flansche (10) als auch das sie verbindende Zwischenstück (12) in zwei Reihen versetzt zueinander angeordnet sind (siehe Figur 3 und Figur 1).

An der der Schutzplatte (1) abgewandten Seite des Abstandhalters (2) ist mittels hier nicht dargestellter Hakenösen oder anderer Befestigungsmittel, eine Verkleidung (3) angeordnet, die sich über den gesamten Außenumfang des Abstandhalters (2) erstreckt.

Bei der dargestellten Verkleidung (3) handelt es sich um ein üblicherweise aus Metallblech durch kurze parallele Schnitte mit anschließender Streckung unter Gitterbildung hergestelltes Metallgitter (siehe Figur 4).

Durch die Ausgestaltung des Abstandhalters (2) bzw. der Flanschhöhe des U-förmig ausgebildeten Querschnittes der einzelnen Abschnitte (10, 12) des Abstandhalters (2), d.h. der der Schutzplatte (1) zugewandten Flansche, von etwa 1,5 cm wird erreicht, daß die Verkleidung (3) in einem Abstand von etwa 1,5 cm zur Schutzplatte (1) angeordnet ist.

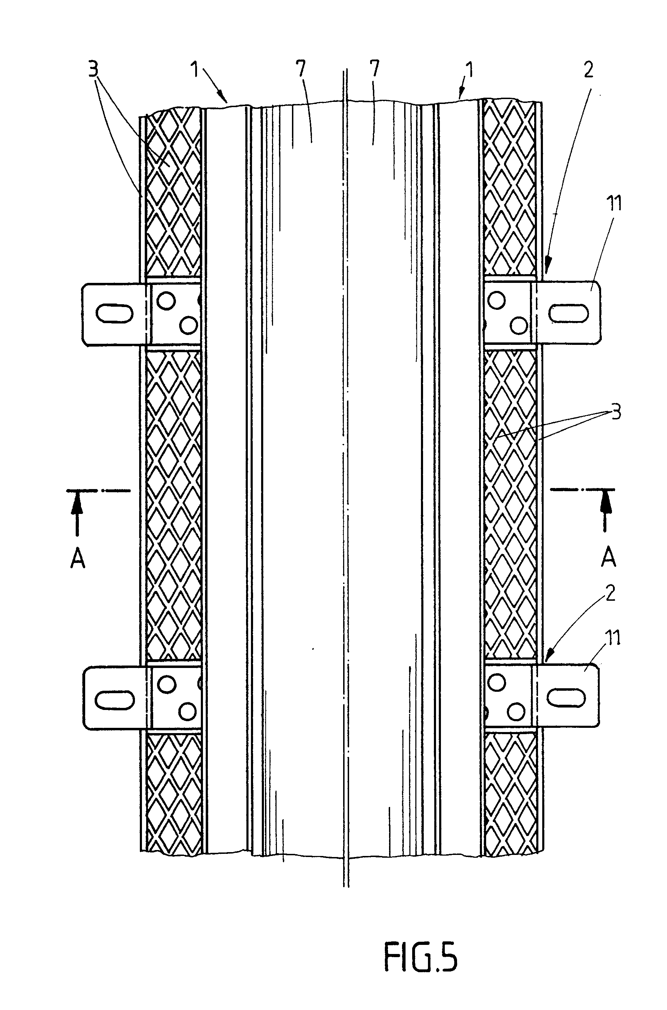

Wie aus Figur 5 ersichtlich, umschließt die Schutzplatte (1) die zu schützenden Gasleitungen (7) lückenlos auf ihrer gesamten Länge, wobei in Abständen jeweils ein Abstandhalter (2) mittels der Lasche (11) zur Befestigung der Schutzplatte (1), z.B. an Wand oder Decke, angeordnet ist und an dessen Außenseite, wie ebenfalls in Figur 5 dargestellt, die Schutzplatte (1) über die gesamte Länge umschließende Abdeckung (3) angeordnet ist.

Die zu schützenden Gasleitungen weisen im allgemeinen einen Durchmesser von 40 bis 80 mm, bevorzugt 60 mm, auf, so daß die Schutzvorrichtung entsprechend ausgestaltet sein muß.

Bei dem Dämmschichtbildner (5, 6) handelt es sich um ein Überzugsmittel das bei Erwärmung aufschäumt, wobei Schaumhöhen von beispielsweise etwa 5 cm erzielt werden. Bei Feuereinwirkung wird durch das Aufschäumen zum einen Energie verbraucht und zum anderen entsteht eine wärmeisolierende Dämmschicht.

Im Inneren der U-förmigen Schutzvorrichtung werden durch Aufschäumen des Dämmschichtbildners in Richtung der zu schützenden Gasleitungen (7) die freien Kanten und Winkel ausgeschäumt.

Auf der Außenseite wird die Schaumbildung bzw. die Schaumhöhe durch die Verkleidung (3) begrenzt, so daß sich durch die so begrenzte Möglichkeit des Aufschäumens eine kompaktere geschäumte Dämmschutzschicht entwickelt, die nicht so leicht verascht, wie beispielsweise eine auf 5 cm aufgequollene Dämmschicht. Im Bereich der Abstandshalter (2) kommt es ebenfalls zu einer Aufschäumung in Richtung Abstandshalter (2), wobei hier ein Ausschäumen des Abstandshalters (2) selbst ermöglicht wird, da die in dem U-förmig ausgestalteten Abstandshalter (2) befindliche Luft durch die Öffnungen (13) entweichen kann und durch Schaum ersetzt wird.

Als Ausführungsbeispiel kann z. B.:

Die Innenbeschichtung (5) des Kerns (4) mit einem Dämmschichtbildner von etwa 1 kg/m$^2$ Dämmschichtbildner-Dispersion (Festkörpergehalt etwa 65%) verwandt werden.

Für die Außenbeschichtung (6) des Kerns (4) kann eine etwa 1,5 kg/m$^2$ Dämmschichtbildner-Dispersion des gleichen Dämmschichtbildners Anwendung finden, der auch innen verwandt wurde.

In dem äußeren Dämmschichtbildner wird ein Glasgittergewebe von etwa 160 g/m$^2$ bzw. 150 - 200 g/m$^2$ eingelegt.

Über den beiden Dämmschichtbildnern wird noch ein Überzugslack angebracht, wobei es sich um einen flammhemmenden Lack handelt.

## Ansprüche

1. Brandschutzvorrichtung für temperaturempfindliche Einrichtungen, insbesondere Gasleitungen aus Blei und Kabelführungen, mit einer die Einrichtungen abschirmenden Abdeckung, **dadurch gekennzeichnet**, daß die Abdeckung mit einem Abstandshalter (2) versehen ist, daß die Abdeckung aus einer Schutzplatte (1) besteht, die einen Kern (4) und wenigstens einen auf der dem Abstandshalter (2) zugewandten Seite aufgebrachten Dämmschichtbildner (6) aufweist, daß eine den Abstandshalter (2) und die Schutzplatte (1) ganz oder teilweise umhüllende Verkleidung (3) vorgesehen ist und daß die Verkleidung (3) im Abstand zur Schutzplatte (1) einen Hohlraum bildend angeordnet ist.

2. Brandschutzvorrichtung nach Anspruch 1, dadurch gekennzeichnet, daß in oder auf dem Dämmschichtbildner (6) ein Gewebe, Gewirke oder Vlies angeordnet ist.

3. Brandschutzvorrichtung nach Anspruch 2, dadurch gekennzeichnet, daß das Gewebe, Gewirke oder Vlies aus Metall- oder Glasfasern besteht und vorzugsweise ein Glasgittergewebe ist.

4. Brandschutzvorrichtung nach einem der Ansprüche 1 bis 3, dadurch gekennzeichnet, daß die Schutzplatte (1) auf der dem Abstandshalter (2) abgewandten Seite ebenfalls mit einem Dämmschichtbildner (5) oder einer ablativ wirkenden oder isolierend wirkenden Beschichtung versehen ist.

5. Brandschutzvorrichtung nach einem der Ansprüche 1 bis 4, dadurch gekennzeichnet, daß der Kern (4) aus einem wärmeisolierenden Substrat besteht.

6. Brandschutzvorrichtung nach Anspruch 5, dadurch gekennzeichnet, daß das Substrat aus Mineralfasern, Calciumsilikatfasern, Keramikfasern oder Vermiculite, insbesondere aus Mineralfasern, besteht.

7. Brandschutzvorrichtung nach einem der Ansprüche 1 bis 6, dadurch gekennzeichnet, daß die Verkleidung (3) am Abstandshalter (2) angeordnet ist.

8. Brandschutzvorrichtung nach einem der Ansprüche 1 bis 7, dadurch gekennzeichnet, daß die Verkleidung (3) aus hitzebeständigem Material besteht.

9. Brandschutzvorrichtung nach einem der Ansprüche 1 bis 8, dadurch gekennzeichnet, daß die Verkleidung (3) sie durchdringende Öffnungen aufweist.

10. Brandschutzvorrichtung nach einem der Ansprüche 1 bis 9, dadurch gekennzeichnet, daß die Verkleidung (3) ein Gitter ist.

11. Brandschutzvorrichtung nach einem der Ansprüche 1 bis 10, dadurch gekennzeichnet, daß die Verkleidung (3) aus gelochtem Metall besteht.

12. Brandschutzvorrichtung nach einem der Ansprüche 1 bis 11, dadurch gekennzeichnet, daß die Verkleidung (3) ein Metallgewebe oder Metallgeflecht, vorzugsweise jedoch ein Metallgitter ist.

13. Brandschutzvorrichtung nach Anspruch 12, dadurch gekennzeichnet, daß die den Abstandshalter (2) und die Schutzplatte (1) umhüllende Verkleidung (3) diese vollflächig auf der der temperaturempfindlichen Einrichtung abgekehrten Seite umhüllt.

14. Brandschutzvorrichtung nach einem der Ansprüche 1 bis 13, dadurch gekennzeichnet, daß der Abstand zwischen Verkleidung (3) und Schutzplatte (1) 0,5 cm bis 5 cm, insbesondere 1 cm bis 2 cm beträgt.

15. Brandschutzvorrichtung nach einem der Ansprüche 1 bis 14, dadurch gekennzeichnet, daß die Verkleidung (3) ein Metallgitter ist.

16. Brandschutzvorrichtung nach einem der Ansprüche 1 bis 15, dadurch gekennzeichnet, daß der Abstandshalter (2) einstückig ausgebildet ist.

17. Brandschutzvorrichtung nach einem der Ansprüche 1 bis 16, dadurch gekennzeichnet, daß der einstückig ausgebildete Abstandshalter (2) beliebig geformt, vorzugsweise jedoch U- oder L-förmig ausgestaltet ist.

18. Brandschutzvorrichtung nach Anspruch 17, dadurch gekennzeichnet, daß die einzelnen Abschnitte des Abstandshalters (2) im Querschnitt U-förmig ausgestaltet sind und die Flansche des U-förmig ausgestalteten Querschnitts in Richtung Schutzplatte (1) weisend angeordnet sind.

19. Brandschutzvorrichtung nach einem der Ansprüche 1 bis 18, dadurch gekennzeichnet, daß die parallel zur Fläche der Schutzplatte (1) verlaufenden Flächen des Abstandhalters (2) mit Öffnungen (13) versehen sind.

20. Brandschutzvorrichtung nach einem der Ansprüche 1 bis 19, dadurch gekennzeichnet, daß die Öffnungen (13) zwei versetzt zueinander angeordnete Reihen von Öffnungen sind.

21. Brandschutzvorrichtung nach einem der Ansprüche 1 bis 20, dadurch gekennzeichnet, daß der Abstandshalter (2) an seinen offenen Flanschenden jeweils mit einer zur Befestigung der Schutzvorrichtung an z.B. einer Wand, Decke dienenden Lasche (11) versehen ist.

**FIG.1**

**FIG.2**

FIG. 3

FIG. 4

FIG.5

**Europäisches Patentamt**

# EUROPÄISCHER RECHERCHENBERICHT

Nummer der Anmeldung

**EP 90 12 3767**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | DE-A-3 227 500 (MONHEIMIUS)<br>* Seite 1; Anspruch 1 * * Seite 4, Zeilen 7 - 20 * * Seite 5,6; Figur * | 1,4,5,6,<br>7-10,12,<br>13,15 | A 62 C<br>3/16<br>H 02 G 3/04<br>F 16 L 57/00 |
| Y | DE-A-3 022 558 (FITECPRO)<br>* Seite 5, letzter Absatz - Seite 6, Zeile 4 * * Seite 7,8 * * Seite 9, Zeilen 1 - 24; Figuren 1-4 * | 1,4,5,6 | |
| Y | DE-A-3 445 329 (G + H MONTAGE GMBH)<br>* Seite 5, Zeile 23 - Seite 6, Zeile 4 * * Seite 10, Zeile 14 - Seite 11, Zeile 13; Figur 1 @ Seite 12, Zeilen 4 - 16; Figur 3 * | 1,4,5,6 | |
| A | DE-U-8 509 123 (WOLTERS KG BRANDSCHUTZTECH-NIK)<br>* Seite 6, Zeilen 4 - 17; Figuren 1-3 * | 1,2,3,5,6 | |
| A | US-A-3 929 167 (BICKEL)<br>* Spalte 2,3 * * Spalte 4, Zeile 41 - Spalte 6, Zeile 31; Figuren 1-4 * * Spalte 8, Zeilen 51 - 56; Figur 6 * | 2,3 | |

RECHERCHIERTE SACHGEBIETE (Int. Cl.5)

A 62 C
H 02 G
F 16 L
E 04 B

Der vorliegende Recherchenbericht wurde für alle Patentansprüche erstellt

| Recherchenort | Abschlußdatum der Recherche | Prüfer |
|---|---|---|
| Den Haag | 22 März 91 | KAPOULAS T. |